# EUROPEAN PATENT APPLICATION

(11) **EP 2 611 148 A1**
(43) Date of publication of application: **03.07.2013**
(21) Application number: 10856381.8
(22) Date of filing: 27.08.2010
(51) Int. Cl.: H04N 7/173

(54) **CONTENT CONVERSION DEVICE, CONTENT CONVERSION METHOD, CONTENT CONVERSION PROGRAM, AND CONTENT DELIVERY SYSTEM**

(71) Applicant: Hitachi Solutions, Ltd., Tokyo 140-0002 (JP)
(72) Inventor: NOBUOKA, Shinya, Tokyo 140-0002 (JP); NAKAMURA, Yuichi, Tokyo 140-0002 (JP); OHAMA, Nobuyuki, Tokyo 140-0002 (JP)
(74) Representative: Liesegang, Eva
(86) International application number: PCT/JP2010/005303
(87) International publication number: WO 2012/025971

(57) **Abstract**

Each of a dynamic image delivering server A 132 and a dynamic image delivering server B 133 delivers a plurality of contents list data and a dynamic image designated by each contents list data. A transcoding server 131 acquires prescribed contents list data from the dynamic image delivering server A 132 and/or the dynamic image delivering server B 133, and stores them in a storage device. Then, the transcoding server 131 acquires the dynamic image designated by the acquired contents list data from the dynamic image delivering server A 132 and/or the dynamic image delivering server B 133, converts the acquired dynamic image to a format of the dynamic image regenerable on a player 111, and stores the converted dynamic image in the storage device. Upon request from the player 111, the transcoding server 131 retrieves a contents list data and/or a dynamic image from the storage device, and transmits them to the player 111.

## Description

### Background of the Invention

### Field of the Invention

The present invention relates to a contents conversion apparatus, a contents conversion method, a contents conversion program and a contents delivery system, which convert a content stored in a contents delivery server connected to a network, to a format regenerable on a player.

### Description of the Related Art

Contents stored in a delivery equipment connected to an in-house network can be viewed on a player such as a television, and the viewing art has become widespread. As an industry standard, there is a DLNA (Digital Living Network Alliance) Guideline (below called the DLNA).
In the DLNA, a player requests a contents list to a delivery equipment within an in-house network, the delivery equipment sends back the contents list as a data of a directory structure. The data of the directory structure is below called a contents directory. As an user of the player selects a content from the contents directory, the player requests the selected content to the delivery equipment, and then the delivery equipment transmits the content to the player.

In which case, contents are stored in a contents delivery server connected to the Internet, it is conceivable to use a gateway apparatus and a transcoding server to view the contents with a DLNA-based player.

The AV gateway apparatus disclosed in Japanese Patent Laid-Open Publication No. 2003-258918 converts a data to a protocol for transmission, so that an AV equipment connected to an AV (Audio Video) network can access to a contents server which is connected to the Internet.
In the same way, between an in-house network and the Internet, a gateway server is provided and the gateway server converts a data to a protocol for transmission. This allows a player and a transcoding server to communicate.

In addition, a transcoding server disclosed in Japanese Patent Laid-Open Publication No. 2004-102339 converts a content stored in a contents delivery server to a format regenerable by a decoder of a client's terminal, and transmits to the client's terminal.
In the same way, the transcoding server converts a content stored in the contents delivery server to a format viewable on the player. This allows the player to regenerate the received contents.

### Summary of the Invention

But the conversion of the format of the contents, especially when the contents are dynamic images, needs a large quantity of processing capacity. If the conversion of the format of the contents takes place each time the player regenerates the contents, the processing capacity of the transcoding server has to be enhanced depending on the number of the players, and the transcoding server needs to have a huge quantity of processing capacity.
For example, assuming that if 1 transcoding server is needed when 3 players regenerate the same contents, 1000 transcoding servers, having the same processing capacity, will be needed when 3000 players regenerate the same contents.

The object of the present invention is to provide a contents conversion apparatus, a contents conversion method, a contents conversion program and a contents delivery system, which convert a format of a content with a constant quantity of processing capacity, despite the number of players regenerating a same content.

In order to solve the problem, a contents conversion apparatus of the present invention comprising a delivery data creator which acquires a prescribed contents list data from a contents delivering apparatus for delivering a plurality of contents list data and contents designated by each of the contents list data, stores it in a storage device, acquires a content designated by the acquired contents list data from the contents delivering apparatus, converts the acquired content to a content with a format regenerable on a player, and stores the converted content in the storage device; and a contents list/contents deliverer which retrieves the contents list data and/or the contents from the storage device, upon request from the player, and transmits them to the player.

Preferably, the contents conversion apparatus of the present invention has the delivery data creator which after storing the prescribed contents list data and the converted contents in the storage device, acquires the prescribed contents list data from the contents delivering apparatus again, discerns whether a new content designated by the prescribed contents list data which was acquired again, but not designated by the prescribed contents list data stored in the storage device, exists or not, in which case, where it was discerned that there is a new content, overwrites the prescribed contents list data stored in the storage device with the prescribed contents list data which was acquired again, converts the new content to a content with a format regenerable on the player, and stores the converted content in the storage device, and repeats the reacquisition of the contents list data, the discernment, the overwriting of the contents list data and the storage of the converted contents.

In addition, a contents conversion method of the present invention comprising a step of creating delivery data, that is acquiring a prescribed contents list data from a contents delivering apparatus for delivering a plurality of contents list data and contents designated by each of the contents list data, storing it in a storage device, acquiring a content designated by the acquired contents list data from the contents delivering apparatus, converting the acquired content to a content with a format regenerable on a player, and storing the converted content in the storage device; and a step of delivering contents list/contents, that is retrieving the contents list data and/or the contents from the storage device, upon request from the player, and transmitting them to the player.

In addition, a contents program of the present invention that causes a computer to execute a step of creating delivery data, that is acquiring a prescribed contents list data from a contents delivering apparatus for delivering a plurality of contents list data and contents designated by each of the contents list data, storing it in a storage device, acquiring a content designated by the acquired contents list data from the contents delivering apparatus, converting the acquired content to a content with a format regenerable on a player, and storing the converted content in the storage device; and a step of delivering contents list/contents, that is retrieving the contents list data and/or the contents from the storage device, upon request from the player, and transmitting them to the player.

Furthermore, a contents delivery system of the present invention, a player and a gateway apparatus are connected to a first network, and the gateway apparatus, a contents conversion apparatus and a contents delivering apparatus are connected to a second network, wherein the contents delivering apparatus delivers a plurality of contents list data and contents designated by each of the contents list data, the contents conversion apparatus includes a delivery data creator which acquires a prescribed contents list data from the contents delivering apparatus, stores it in a storage device, acquires a content designated by the acquired contents list data, from the contents delivering apparatus, converts the acquired content to a content with a format regenerable on a player, and stores the converted content in the storage device, and a contents list/contents deliverer which retrieves the contents list data and/or the contents from the storage device, upon request from the gateway apparatus, and transmits them to the player, the gateway apparatus includes a contents directory creator which upon request from the player, requests the contents list data to the contents delivering apparatus, acquires the contents list data from the contents conversion apparatus, converts the acquired contents list data into a contents directory, and transmits the contents directory to the player, and a contents acquirer/relayer which upon request from the player, requests a content to the contents delivering apparatus, acquires a content from the contents conversion apparatus, and transmits the acquired content to the player, and the player includes a contents directory acquirer/displayer which requests the contents directory to the gateway apparatus, acquires the contents directory from the gateway apparatus, and displays it on a displaying device, and a contents regenerator which requests a content selected by an user from the contents designated by the contents list data included in the contents directory displayed on the displaying device.

According to the present invention, a contents conversion apparatus can convert the format of the contents with a constant quantity of processing capacity, despite the number of the players regenerating the same contents.

### Brief Description of the Drawings

Fig.1 is a schematic view showing an example of a configuration of a contents delivery system.
Fig.2 is a block diagram showing an example of a configuration of a program of a player.
Fig.3 is a block diagram showing an example of a configuration of a program of a gateway apparatus.
Fig.4 is a block diagram showing an example of a configuration of a program of a transcoding server.
Fig.5 is a block diagram showing an example of a configuration of a program of a dynamic image delivering server.
Fig.6 is a block diagram showing an example of a configuration of a dynamic image site A bundle included in a program of a dynamic image delivering server A.
Fig.7 is a block diagram showing an example of a configuration of a contents directory stored in a gateway apparatus.
Fig.8 is a table showing an example of a dynamic image list data.
Fig.9 is a table showing an example of a transcoded dynamic image URL related table stored in a transcoding server.
Fig.10 is a table showing an example of a delivery dynamic image list data stored in a transcoding server.
Fig.11 is a table showing an example of a contents directory stored in a gateway apparatus.
Fig.12 is a table showing an example of an ID dynamic image related table stored in a gateway apparatus.
Fig. 13 (A) is a table showing an API conversion table stored in a transcoding server.
Fig.13 (B) is a table showing a directory/API related table stored in a gateway apparatus.
Fig. 14 is a flow chart showing a processing executed by a contents directory creator of a dynamic image site A bundle.
Fig.15 (A) is a block diagram showing a first screen image displayed on a player's display.
Fig.15 (B) is a block diagram showing a second screen image displayed on a player's display.
Fig.15 (C) is a block diagram showing a third screen image displayed on a player's display.
Fig.15 (D) is a block diagram showing a fourth screen image displayed on a player's display.
Fig.16 is a flow chart showing a processing executed by a delivery data creator of a transcoding server.
Fig.17 (A) is a flow chart showing a delivery processing of a dynamic image list executed by a transcoding server.
Fig.17 (B) is a flow chart showing a delivery processing of a dynamic image executed by a transcoding server.
Fig.18 is a block diagram showing a processing of acquiring contents directory.
Fig.19 is a block diagram showing a processing of regenerating contents.

### Detailed Description of the Invention

An embodiment of a contents delivery system of the present invention will be below described with reference to the drawings.
There are various kinds of contents such as dynamic images, music, photographs, etc., but as an example, it will be below described a contents delivery system including a dynamic image delivering server which delivers dynamic images.

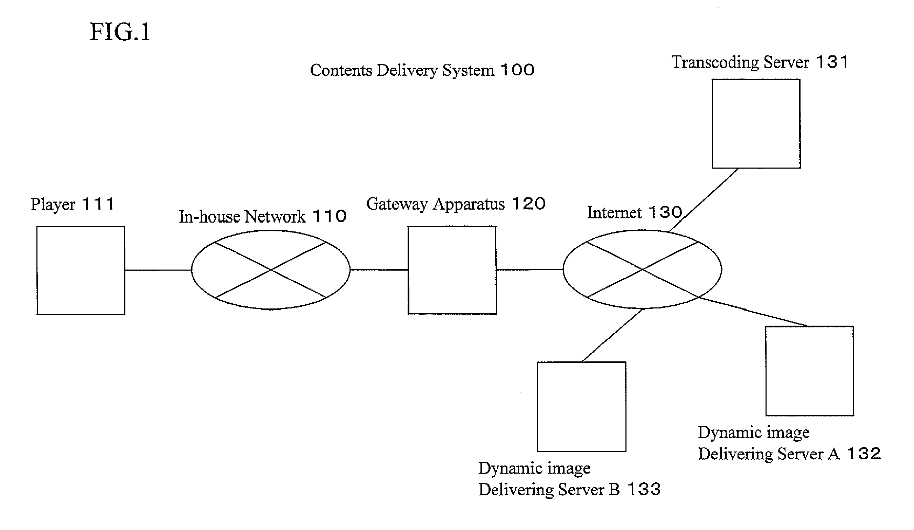

A contents delivery system 100 includes a player 111, a gateway apparatus 120, a transcoding server 131, a dynamic image delivering server A 132 and a dynamic image delivering server B 133 as shown in Fig.1.
In addition, as shown in Fig.1, the player 111 and the gateway apparatus 120 are connected to an in-house network 110. The gateway apparatus120, the transcoding server 131, the dynamic image delivering server A 132 and the dynamic image delivering server B 133 are connected to the Internet 130.

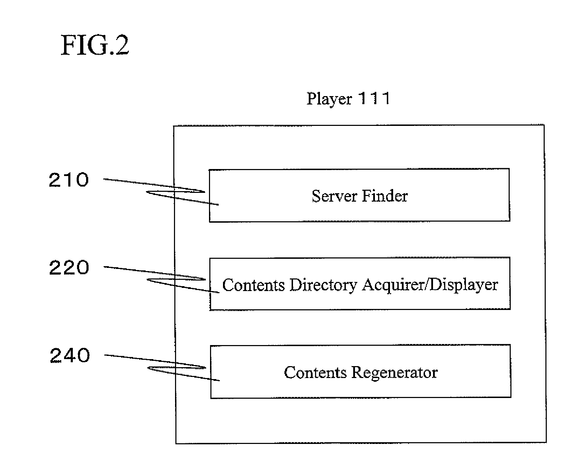

The player 111 includes a main storage device comprised from such as a CPU (Central Processing Unit) and a RAM (Random Access Memory), a network interface, an input device such as a remote control, and a display.
The player 111 acquires a contents directory from the gateway apparatus 120 and displays it on the display. Then as an user selects a content such as by a remote control, the player 111 acquires the selected content from the transcoding server 131 via the gateway apparatus 120 and regenerates the acquired content.
The player 111 executes these various processing by executing a program stored in the main storage device. A detailed configuration of the program of the player 111 will be below described with reference to Fig.2.

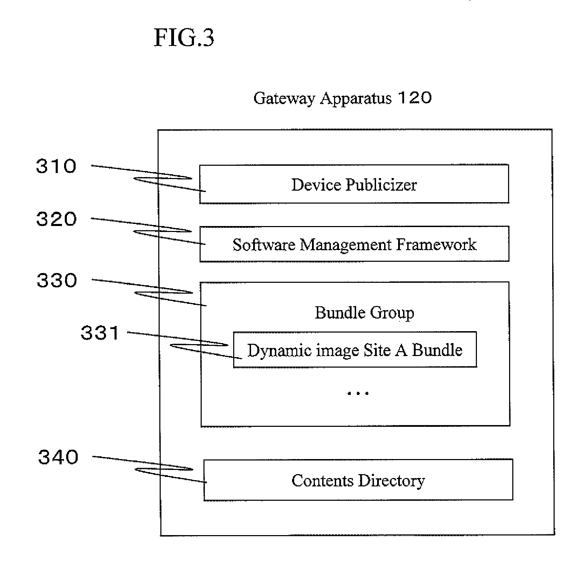

The gateway apparatus 120 includes a main storage device comprised from such as a CPU and a RAM, and two network interfaces.
The gateway apparatus 120 is connected to the in-house network 110 and the Internet 130, and relays the communication of the player 111 and the transcoding server 131. The gateway apparatus 120 also creates a contents directory and transmits it to the player 111.
The gateway apparatus 120 executes these processing by executing a program stored in the main storage device. A detailed configuration of the program of the gateway apparatus 120 will be below described with reference to Fig.3.

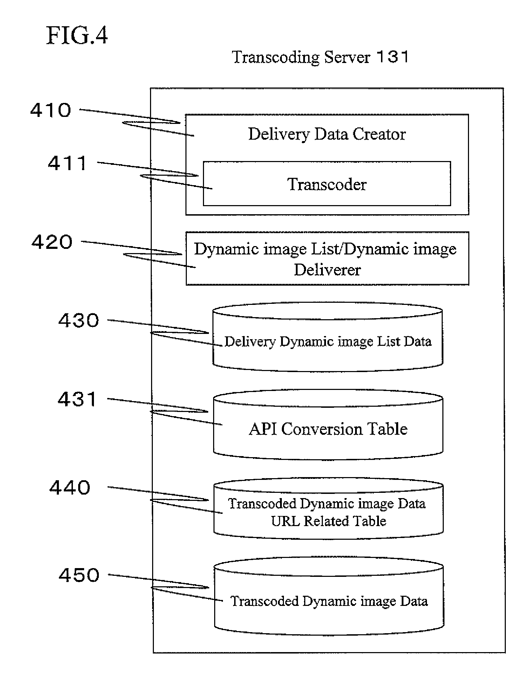

The transcoding server 131 includes a main storage device comprised from such as a CPU and a RAM, a network interface and an auxiliary storage device comprised from such as a hard disk.
The transcoding server 131 acquires deliverable dynamic image lists from the dynamic image delivering server A 132 and the dynamic image delivering server B 133, and stores them in the auxiliary storage device. The transcoding server 131 acquires dynamic images correspond to the acquired dynamic image lists from the dynamic image delivering server A 132 and the dynamic image delivering server B 133, converts the format of the acquired dynamic images to a format regenerable on the player 111, and stores them in the auxiliary storage device. Then responding to a request from the player 111, it transmits the stored dynamic image list and the dynamic image to the gateway apparatus 120.
The transcoding server 131 executes these processing by executing a program stored in the main storage device. A detailed configuration of the program of the transcoding server 131 will be below described with reference to Fig.4.

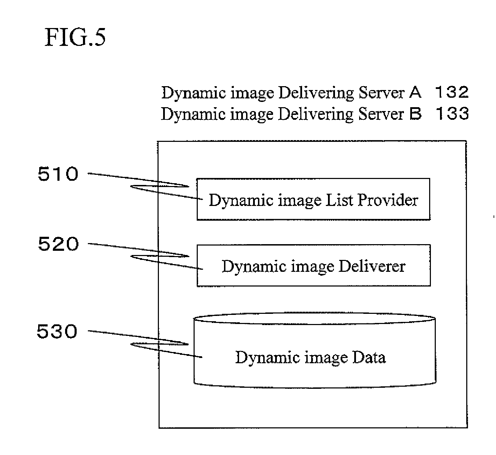

The dynamic image delivering server A 132 is administered by a dynamic image delivery company A and publicizes a dynamic image site A on the Internet 130. The dynamic image delivering server B 133 is administered by a dynamic image delivery company B and publicizes a dynamic image site B on the Internet 130.
Each of these dynamic image delivering servers includes a main storage device comprised from such as a CPU and a RAM, a network interface and an auxiliary storage device comprised from such as a hard disk.
Each dynamic image delivering server stores the deliverable dynamic images in the auxiliary storage device. Each dynamic image delivering server transmits the dynamic images to the transcoding server 131 and the like. Each dynamic image delivering server has a function of providing dynamic image lists which provide the dynamic image lists stored in the auxiliary storage device, and responding to the request from the transcoding server 131, transmits a dynamic image list to the transcoding server 131.
Each dynamic image delivering server executes these processing by executing a program stored in the main storage device. A detailed configuration of the program of each dynamic image delivering server will be below described with reference to Fig.5.

Fig.2 is showing an example of a configuration of a program of the player 111. The program of the player 111 is comprised from a server finder 210, a contents directory acquirer/displayer 220 and a contents regenerator 240.
The server finder 210 has a function of finding a delivering device having a contents delivery function which is connected to the in-house network 110. First, the server finder 210 broadcasts a device finding request message within the in-house network 110. Then, each device connected to the in-house network 110 sends back a function which it has, in reply to the device finding request message. This allows the server finder 210 to find a delivering device having a contents delivery function. This kind of means for device finding is feasible, for example, by embodying the UPnP (Universal Plug and Play) DA (Device Architecture) standard.
The gateway apparatus 120 is one of the delivering device having a contents delivery function. The server finder 210 can find the gateway apparatus 120 by broadcasting the device finding request message within the in-house network 110.

The contents directory acquirer/displayer 220 acquires a contents directory from the delivering device having a contents delivery function and displays it on a display of the player 111.
The contents regenerator 240 transmits a request designating a content which will be regenerated, to the delivering device having a contents delivery function. As the delivering device receives the request, it transmits the content to the player 111. The player 111 regenerates the received content. A format of contents regenerable by the contents regenerator 240 is usually limited. In this embodiment, it is assumed that only an MPEG-2 dynamic image encoded by MPEG-2 is regenerable by the contents regenerator 240.

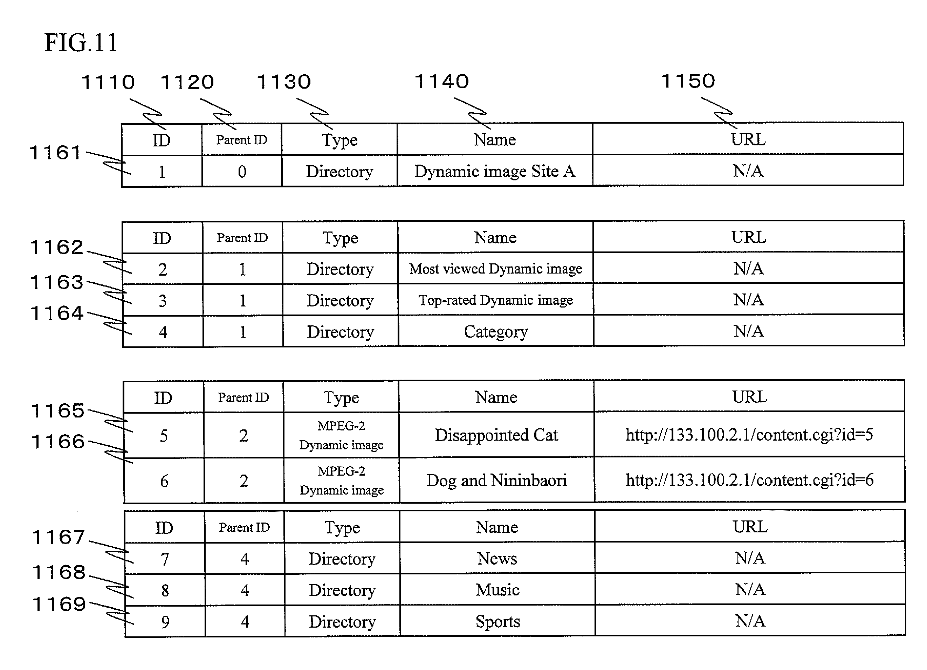

As an example of a player having the above functions, there is a DMP (Digital Media Player) device defined by the DLNA.
A configuration of the contents directory, a detailed processing of the contents directory acquirer/displayer 220, a flow of a contents directory acquiring processing and a flow of a contents regenerating processing will be below described with reference to Fig.11, Fig.15, Fig.18 and Fig.19, respectively.

Fig.3 is showing an example of a configuration of a program of the gateway apparatus 120. The program of the gateway apparatus 120 is comprised from a device publicizer 310, a software management framework 320 and a bundle group 330. The contents directory 340 is stored in a main storage device.
The device publicizer 310 responds to the device finding request message broadcasted by the player 111 and sends back a message indicating the gateway apparatus 120 is a delivering device having a contents delivery function to the player 111.
The software management framework 320 manages programs in an unit of a module called a bundle. The software management framework 320 can install and uninstall each bundle without restarting the whole system of the gateway apparatus 120. Such software management framework 320 can be implemented by embodying an OSGi (Open Service Gateway initiative) standard.

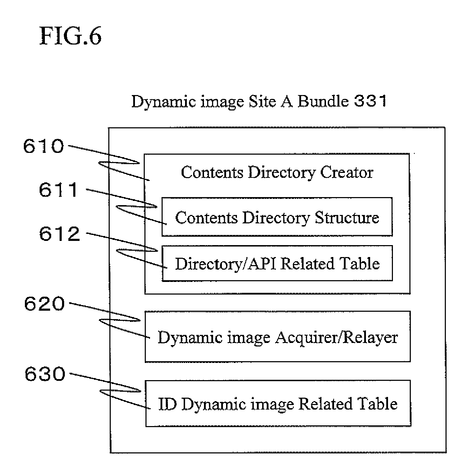

The bundle group 330 is a group of bundles managed by the software management framework 320. A dynamic image site A bundle 331 mediates between the dynamic image site A and the player 111. In this embodiment, there is only one dynamic image site A bundle 331, but the bundle could be more than one.
The contents directory 340 stores a contents directory created by the dynamic image site A bundle 331. The contents directory created by the dynamic image site A bundle 331 designates a dynamic image list deliverable by the dynamic image site A.
A detailed configuration of the dynamic image site A bundle 331 and a structure of the contents directory 340 will be below described with reference to Fig.6 and Fig. 11, respectively.

Fig.4 is showing an example of a configuration of a program of the transcoding server 131. The program of the transcoding server 131 is comprised from a delivery data creator 410 and a dynamic image list/dynamic image deliverer 420. A delivery dynamic image list data 430, an API conversion table 431, a transcoded dynamic image data URL related table 440 and a transcoded dynamic image data 450 are stored in an auxiliary storage device.

The delivery data creator 410 responds to a request transmitted by the player 111 via the gateway apparatus 120 and acquires a dynamic image list and a dynamic image from a dynamic image site.
The delivery data creator 410 includes a transcoder 411. The transcoder 411 converts a format of the acquired dynamic image to a format regenerable on the player 111 and stores the converted dynamic image in the auxiliary storage device as a transcoded dynamic image data 450. For example, the transcoder 411 converts a dynamic image encoded by H.264 to an MPEG-2 dynamic image.
In this regard, the delivery data creator 410 stores a data which associates a URL (Uniform Resource Locator) of the dynamic image site with the dynamic image stored in the auxiliary storage device, as a transcoded dynamic image data URL related table 440, in the auxiliary storage device.

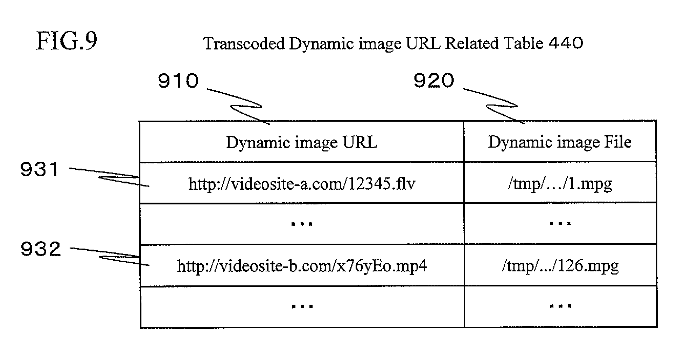

The delivery data creator 410 stores the acquired dynamic image list data in the auxiliary storage device as a delivery dynamic image list data 430.
An API conversion table 431 is a correspondence table previously stored in the auxiliary storage device, for converting the request (API) transmitted from the gateway apparatus 120 to the transcoding server 131, to a request for transmitting to the dynamic image site, when acquiring a dynamic image list data from a dynamic image site.
The transcoded dynamic image data URL related table 440, the delivery dynamic image list data 430, the API conversion table 431 and a flow of a processing of the delivery data creator 410 will be below described with reference to Fig.9, Fig.10, Fig.13 (A) and Fig.16, respectively.

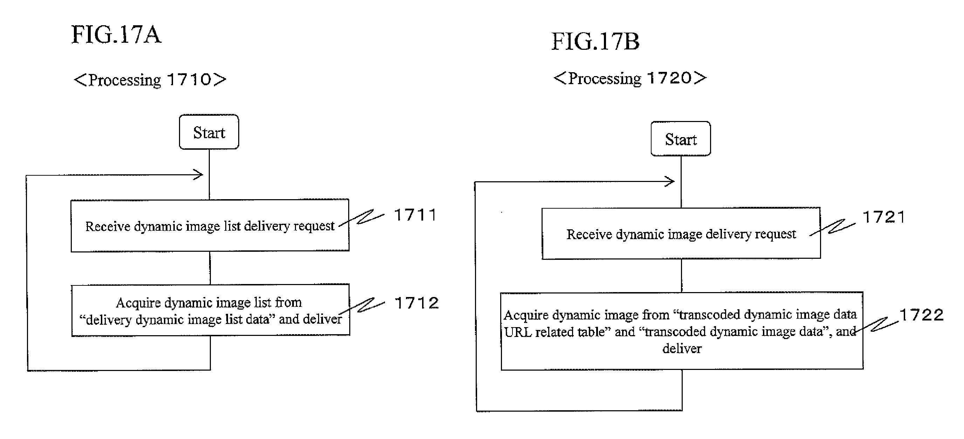

The dynamic image list/dynamic image deliverer 420 responds to a request transmitted by the player 111 via the gateway apparatus 120, acquires a dynamic image list data from the delivery dynamic image list data 430 and an MPEG-2 dynamic image from the transcoded dynamic image data 450, respectively, and transmits them to the gateway apparatus 120. A flow of a processing of the dynamic image list/dynamic image deliverer 420 will be below described with reference to Fig.17.

Fig.5 is showing an example of a configuration of a program of the dynamic image delivering server A 132 and the dynamic image delivering server B 133. The program of each dynamic image delivering servers is comprised from a dynamic image list provider 510 and a dynamic image deliverer 520. Deliverable dynamic images are stored in a dynamic image data 530. The dynamic image data 530 is stored in the auxiliary storage device.
The dynamic image list provider 510 responds to a request from such as the transcoding server 131 and sends back the dynamic image list data to such as the transcoding server 131. As an example of the request, there are a popular dynamic image, a most viewed dynamic image, a top-rated dynamic image, a dynamic image including a particular keyword and the like.

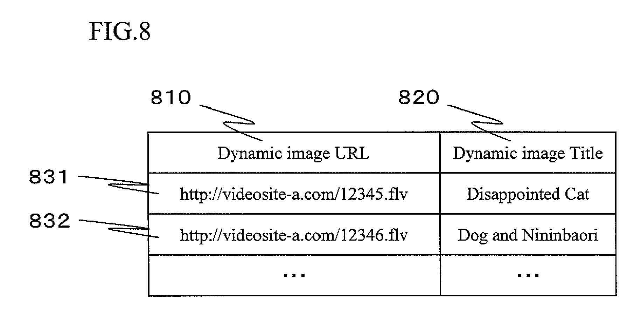

The transcoding server 131 and others, for example, transmit a request using an HTTP protocol (Hyper Text Transfer Protocol). For instance, assuming that the transcoding server 131 transmitted the following HTTP request (API) to the dynamic image delivering server.
http://videosite-a.com/api.cgi?request=mostviewed
In this case, api.cgi is a CGI (Common Gateway Interface) program which executes a processing of the dynamic image list provider 510.
The dynamic image list provider 510 of the dynamic image delivering server which received this HTTP request, by an argument "request=mostviewed" given to api.cgi, discerns that the kind of the request is a most viewed dynamic image, and sends back a most viewed dynamic image list data to the transcoding server 131.
The dynamic image list data transmitted by the dynamic image delivering server will be below described with reference to Fig.8.

The dynamic image delivering servers may differ from each other in what kind of request each server has, the means for making a request and the format of dynamic image list data. The above is just an example of a request. The transcoding server 131 transmits a request with an appropriate form for each dynamic image delivering server.

The transcoding server 131 and others which acquired the dynamic image list data, request a desired dynamic image data to the dynamic image site, then the dynamic image deliverer 520 extracts the requested dynamic image from the dynamic image data 530 and transmits it to the transcoding server 131 and others.

Fig.6 is showing an example of a configuration of a dynamic image site A bundle 331. The dynamic image site A bundle 331 is comprised from a contents directory creator 610 and a dynamic image acquirer/relayer 620. A contents directory structure 611, a directory/API related table 612 and an ID dynamic image related table 630 are stored in the main storage device.

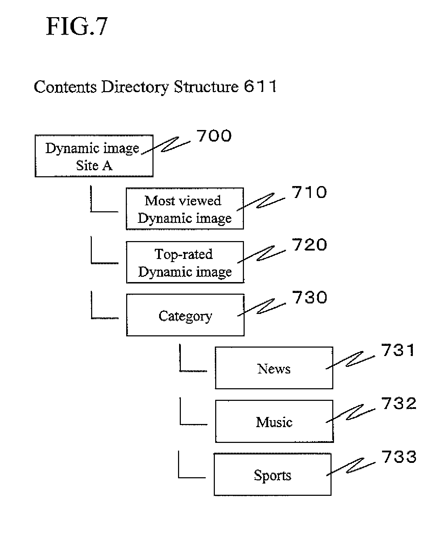

The contents directory creator 610 acquires a dynamic image list data from the transcoding server 131 and adds the dynamic image list data to a corresponding directory included in the contents directory.
In the contents directory structure 611, a structure of the contents directory is stored.
In the directory/API related table 612, data indicating a correspondence between each directory included in the contents directory and a request (API) to the dynamic image site A for acquiring the dynamic image list data, are stored. A correspondence relation between the contents directory structure and the directory and API is static in the dynamic image site A bundle 331 and not varies.
The contents directory structure 611, the directory/API related table 612, and a flow of a processing of the contents directory creator 610 will be below described with reference to Fig.7, Fig.13 (B), and Fig.14, respectively.

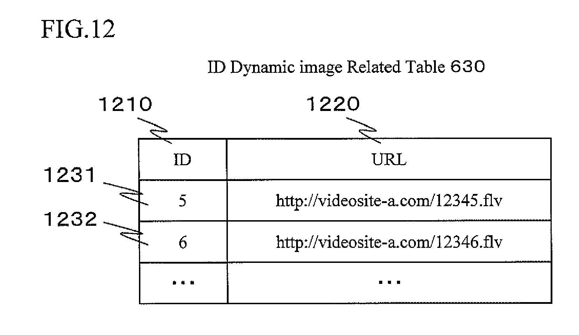

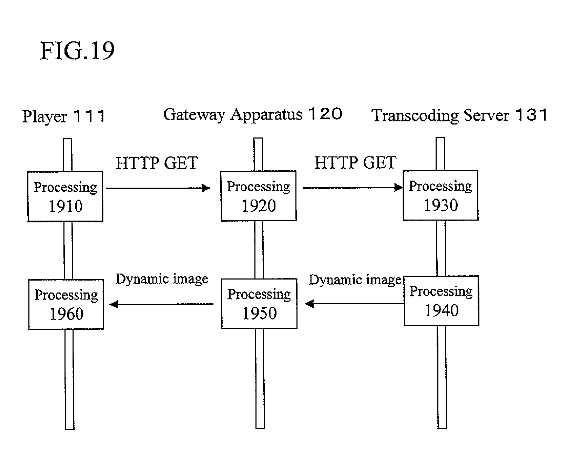

The dynamic image acquirer/relayer 620 relays the dynamic image acquiring request to the transcoding server 131 with reference to the ID dynamic image related table 630 as it receives a dynamic image acquiring request from the player 111. In this case, the ID dynamic image related table 630 is a table for associating the contents directory 340 with a dynamic image URL of the dynamic image site.
The ID dynamic image related table 630 and a processing of the dynamic image acquirer/relayer 620 will be below described with reference to Fig.12 and Fig.19, respectively.

Fig.7 is showing an example of a hierarchy structure of the directory (contents directory structure 611) included in the contents directory.
The contents directory structure 611 is static and the contents directory creator 610 holds the contents directory structure 611 previously.
The contents directory creator 610 adds a data concerning the dynamic image list data to the contents directory based on the contents directory structure 611, and returns a data concerning the contents directory to the player 111. The contents directory creator 610, for example, returns three directories which are a most viewed dynamic image 710, a top-rated dynamic image 720 and a category 730, to the player 111 as it receives a request from the player 111 to the dynamic image site A 700. In addition, the contents directory creator 610 acquires the dynamic image list from the transcoding server and returns the dynamic image list to the player 111 as it receives a request of the most viewed dynamic image 710 from the player 111.

Fig.8 is showing an example of dynamic image list data.
The dynamic image list data is comprised from a combination of a dynamic image URL 810 and a corresponding dynamic image title 820. A structured language such as an XML may be used as the character string representation of a dynamic image list data.

Fig.9 is showing an example of a transcoded dynamic image URL related table 440 stored in the transcoding server. The transcoded dynamic image URL related table 440 is comprised from a combination of a dynamic image URL 910 and a corresponding dynamic image file 920. The dynamic image URL 910 indicates a URL of a dynamic image site where the dynamic image before transcoding was acquired. The dynamic image file 920 indicates a path of a dynamic image file converted to an MPEG-2 dynamic image in the transcoded dynamic image data 450.

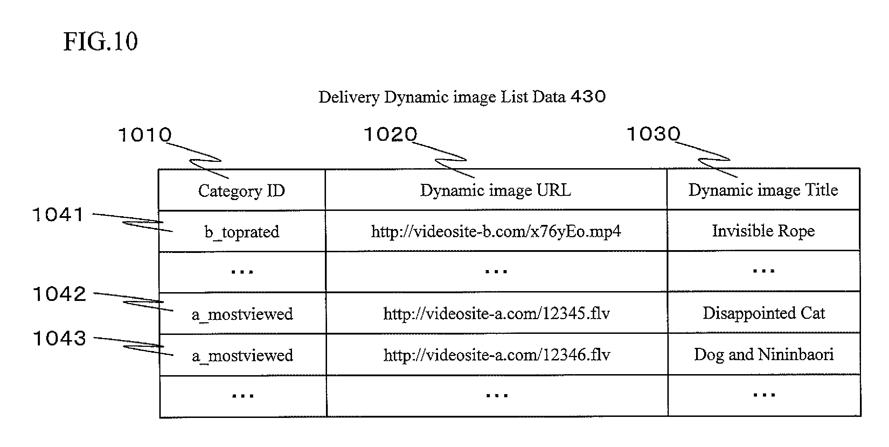

Fig.10 is showing an example of a delivery dynamic image list data 430 stored in the transcoding server.
The delivery dynamic image list data 430 is comprised from a category ID 1010, a dynamic image URL 1020 and a dynamic image title 1030.
The category ID 1010 is a unique ID corresponding to a request transmitted to the dynamic image list provider 510 of the dynamic image delivering server. For instance, assuming that the transcoding server 131 transmitted the following request to the dynamic image site A.
http://videosite-a.com/api.cgi?request=mostviewed
In this case, for example, the category ID is a mostviewed (but it does not have to be a_mostviewed, as long as it is unique.).
The dynamic image URL 1020 indicates a URL of a dynamic image file within a dynamic image site, and the dynamic image title 1030 indicates a title of a dynamic image, respectively.

Fig.11 is showing an example of a contents directory 340 stored in the gateway apparatus 120.
The contents directory is comprised from an ID 1110, a parent ID 1120, a type 1130, a name 1140 and a URL 1150. The contents directory 340 can express a contents list as a structure of the directory and contents allocated to each directory.
The ID 1110 is an unique ID allocated to a content. The parent ID 1120 indicates a parent directory to which a content belongs. The type 1130 indicates a format of a content. But in which case, where the type 1130 is "directory", it indicates that the concerned line is corresponding to the directory. The name 1140 indicates a name of a content or a directory. The URL 1150 is a URL indicating a place where a content is located.

An example of a contents directory shown in Fig.11 is described below. A line 1161 indicates a directory having a name called "dynamic image site A" which is a child element of a root directory. Being a child element of a root directory is indicated by a parent ID 1120 which is "0". Lines 1162-1164 are child elements of the "dynamic image site A" directory. In lines 1162-1164, three lines with the type 1130 directory are stored. Lines 1165 and 1166 are child elements of the directory "most viewed dynamic image" in the line 1162. In lines 1165 and 1166, two lines with the type 1130 MPEG-2 dynamic image are stored. Lines 1167-1169 are child elements of the directory "category" in the line 1164. In lines 1167-1169, three lines with the type 1130 directory are stored.

Fig.12 is showing an example of an ID dynamic image related table 630 stored in the gateway apparatus 120.
The ID dynamic image related table 630 is comprised from an ID 1210 and a URL 1220.
In the ID 1210, an ID 1110 of the line with the type 1130 MPEG-2 dynamic image in the contents directory in Fig.11 is stored. A URL 1220 is a URL indicating where the dynamic image is located on the Internet 130. For example, an ID 1210 of a line 1231 is "5", so the line 1231 corresponds to the line 1165 in Fig.11.

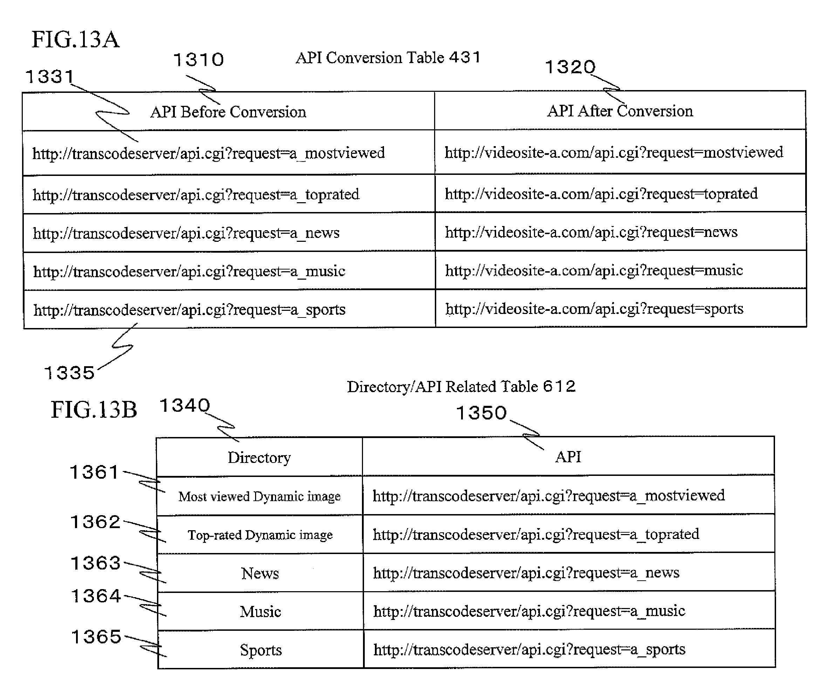

Fig.13 (A) is showing an API conversion table 431 stored in the transcoding server 131.
The API conversion table 431 is comprised from an API before conversion 1310 and an API after conversion 1320. The API conversion table 431 is a correspondence table for converting a request (the API before conversion 1310) transmitted from the gateway apparatus 120 to the transcoding server 131, to a request (the API after conversion 1320) for transmitting to the dynamic image site, when acquiring a dynamic image list data from the dynamic image site.

Fig.13 (B) is showing a directory/API related table 612 stored in the gateway apparatus.
The directory/API related table 612 is comprised from a directory 1340 and an API 1350.
As the contents directory creator 610 receives a request from the player 111 for a directory which holds a dynamic image list, the directory/API related table 612 associates the directory with an API (URL) of the dynamic image site where the dynamic image list will be retrieved.

For example, assuming that the player 111 transmits a request for a "most viewed dynamic image", the contents directory creator 610 transmits the following request to the transcoding server 131.
http://transcodeserver/api.cgi?request=a_mostviewed
As the transcoding server 131 receives the request, it converts the request to the following request by using the API conversion table 431, and transmits it to the dynamic image site.
http://videosite-a.com/api.cgi?request=mostviewed

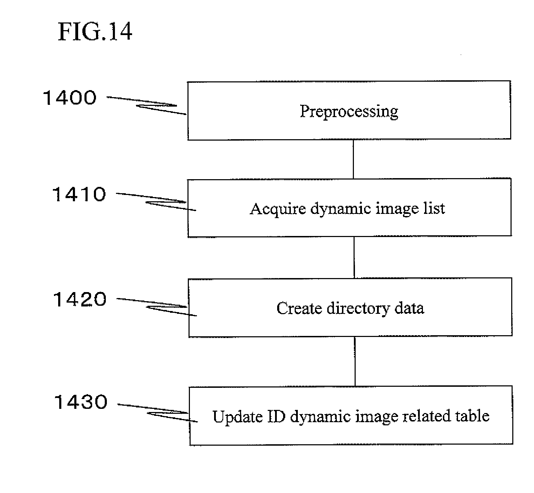

Fig. 14 is showing a processing of the contents directory creator 610 of the dynamic image site A bundle 331.
The contents directory creator 610 holds already created contents directory data as a contents directory 340, in the main storage device of the gateway apparatus 120.
In addition, the contents directory creator 610 stores a data of a hierarchy structure of the contents directory 340, i.e., a data of what kind of child directory each directory holds, as a contents directory structure 611 (refer to Fig.7), in the main storage device previously.

The contents directory creator 610 acquires a dynamic image list from the transcoding server 131 when the directory of the contents directory 340 corresponds to the dynamic image list of the dynamic image delivering server (for example, such as a "most viewed dynamic image" directory), and generates a data line of the contents directory dynamically. A directory which does not correspond to the dynamic image list of the dynamic image delivering server, is a directory which holds only a directory as a child element.
For acquiring the dynamic image list, the gateway apparatus 120 stores a correspondence between each directory and an API of the transcoding server 131, as a directory/API related table 612 (refer to Fig.13 (B)) in the main storage device, previously.
A description is below given using an example where the contents directory 340 data of the lines 1161-1164 of Fig.11 are already stored in the main storage device.

### <Step 1400>

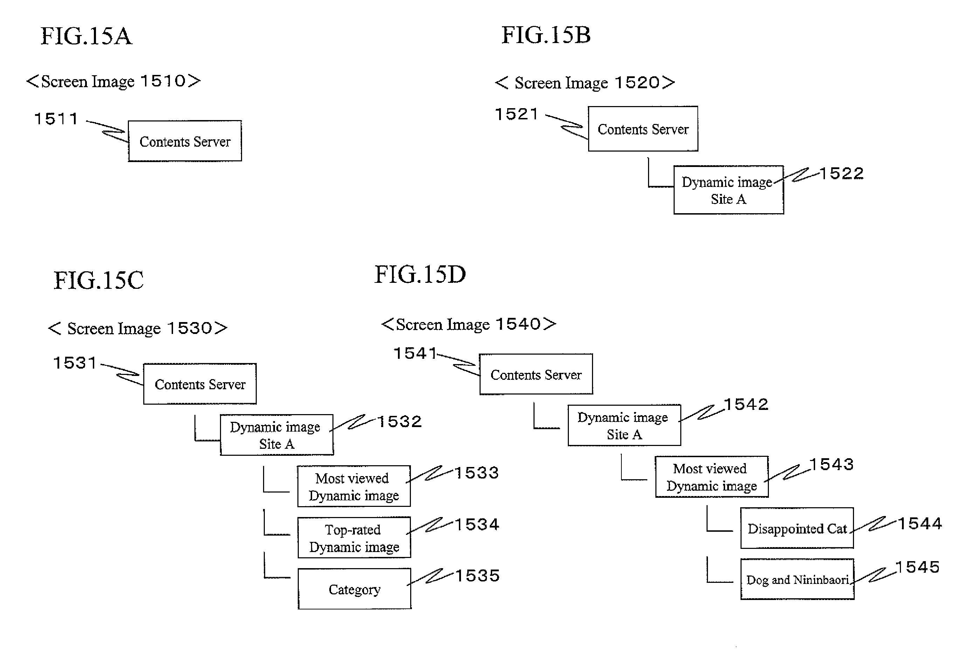

As described below with reference to Fig. 15, the player 111 notifies the inputted ID 1110 with such as a DLNA based SOAP message. For example, if the player 111 requests a directory called dynamic image site A in the line 1161, then the input from the player 111 is "1".
If there is an entry having the parent ID 1120 identical to the ID 1110 inputted by the player 111, the contents directory creator 610 outputs the entry and terminates. For example, if the inputted ID 1110 is "1", then it outputs the lines 1162-1164 whose parent ID 1120 is 1, and terminates.
A description is below given in the case where the inputted ID 1110 is "2" (The name 1140 is "most viewed dynamic image").

### <Step 1410>

The contents directory creator 610 acquires a dynamic image list data corresponding to the directory name 1140 from the transcoding server 131. In this example, the directory name 1140 is "most viewed dynamic image", and hence, by using the following URL request of the line 1361 extracted from the directory/API related table 612 (refer to Fig.13 (B)), calls the dynamic image list/dynamic image deliverer 420 of the transcoding server 131 and acquires a dynamic image list data of the "most viewed dynamic image".
http://transcodeserver/api.cgi?request=a_mostviewed
A description is below given in the case where the data of Fig.8 is acquired as the dynamic image list data.

### <Step 1420>

The contents directory creator 610 generates a contents directory data line for each line of the dynamic image list data of Fig.8. A description is given using an example of a processing for a line 831 where the lines 1161-1164 are already created as the contents directory data. The contents directory creator 610 executes the processing of the following (1)-(5).

### (1) Generation of ID 1110

The contents directory creator 610 generates an ID which does not exist in the already created contents directory ID 1110. There is no "5" in the ID of the lines 1161-1164, and hence, the contents directory creator 610 sets the ID to "5".

### (2) Generation of Parent ID 1120

The contents directory creator 610 sets the parent ID 1120 to inputted ID "2" (most viewed dynamic image).

### (3) Generation of Type 1130

The contents directory creator 610 sets the type 1130 to a format regenerable on the player 111. This time, an MPEG-2 dynamic image is regenerable on the player 111 and all of the dynamic images are converted to MPEG-2 dynamic image by the transcoding server 131, so the contents directory creator 610 sets the type 1130 to "MPEG-2 dynamic image".

### (4) Generation of Name 1140

The contents directory creator 610 sets the name 1140 "Disappointed Cat" directly using the column of the dynamic image title 820 of the dynamic image list data (refer to Fig.8).

### (5) Generation of URL 1150

The contents directory creator 610 sets the URL 1150 as follows.
http://<the address of the gateway apparatus (this time, set to 133.108.2.1)>/content.cgi?id=<the value of the ID 1110>
So the contents directory creator 610 sets the URL 1150 to the following.
http://133.108.2.1/content.cgi?id=5
The above processing is executed to thereby generate a line 1165. In the same way, the processing (1)-(5) is executed by the contents directory creator 610 for a line 832 to thereby generate a line 1166.

If "2" is inputted as an ID 1110 after "3" or "4" is inputted as an ID 1110, then a contents directory other than that of Fig.11 will be generated. There is a gateway apparatus 120 in each in-house network, and hence, the player 111 recognizes one gateway apparatus 120. Thus, there is no problem with each gateway apparatus 120 having different contents directory. For instance, if the ID 1110 of "Disappointed Cat" is "7", the player 111 is given the ID 1110 "7", URL 1150 "http://133.100.2.1/content.cgi?id=7", and a line of the ID dynamic image related table 630 shown in Fig.12 will be generated correspondingly. Thus, despite, each gateway apparatus 120 has different contents directory, there is no problem for the player 111 to acquire the "Disappointed Cat" dynamic image under the "most viewed dynamic image" directory.

### <Step 1430>

The contents directory creator 610 updates the ID dynamic image related table 630 (refer to Fig.12). The contents directory creator 610 sets a same ID 1210 as that of the ID 1110 of the contents directory (refer to Fig.11), and sets a same URL 1220 as that of the dynamic image URL 810 of the dynamic image list data (refer to Fig.8), for each line of the ID dynamic image related table 630. Consequently, the ID dynamic image related table 630 shown in Fig. 12 is obtained.
Finally, the contents directory creator 610 adds the lines generated in <Step 1420> to the contents directory 340 and transmits the lines to the player 111. This time, the contents directory creator 610 adds and transmits the data of the lines 1165 and 1166.

Next, a description of the processing of the contents directory acquirer/displayer 220 until an user is able to select the contents, is given using a screen image displayed on a display of the player 111 shown in Fig.15.
This time, the lines 1161-1164 are stored in advance in the main storage device of the gateway apparatus 120, as an initial configuration of the contents directory 340.

### <Screen Image 1510>

As an user turns on the power of the player 111 and selects a menu for viewing contents delivered by a dynamic image site connected to the Internet 130, by a remote control, the server finder 210 displays the name of the gateway apparatus 120 which was found.
In the configuration of Fig.1, in response to the server finder 210, the device publicizer 310 in the gateway apparatus 120 sends back "server name "contents servers"", and as indicated in Fig.15 (A), the contents server 1511 is displayed on the display of the player 111.

### <Screen Image 1520>

A selection of the contents server 1511 is made using the remote control or the like of the player 111 by the user. The gateway apparatus 120 is notified (notified by such as a DLNA based SOAP message) of the selection of the contents server 1511 by the contents directory acquirer/displayer 220 of the player 111. At this time, "0" is inputted as an inputted ID 1110 in the contents directory creator 610 of the dynamic image site A bundle 331. In reply, the gateway apparatus 120 sends back a contents directory such as that of the line 1161 of Fig.11 to the player 111, using the contents directory creator 610. As indicated in Fig.15 (B), the dynamic image site A 1522 is displayed on the display of the player 111 by the contents directory acquirer/displayer 220. The dynamic image site A 1522 is a name of the site which is publicized on the Internet by the dynamic image delivering server A.

### <Screen Image 1530>

A selection of the dynamic image site A 1522 is made by the user. The gateway apparatus 120 is notified of the selection of the dynamic image site A 1522 by the contents directory acquirer/displayer 220. At this time, "1" is inputted as an inputted ID 1110 in the contents directory creator 610 of the dynamic image site A bundle 331. In reply, the content directory creator 610 sends back the lines 1162-1164 of Fig.11 to the player 111. As indicated in Fig.15 (C), the names 1140 of the lines 1162-1164 are displayed on <Screen Image 1530>, and are made selectable by the remote control, by the contents directory acquirer/displayer 220.

### <Screen Image 1540>

A selection of the most viewed dynamic image 1533 is made by the user. The gateway apparatus 120 is notified of the selection of the most viewed dynamic image 1533 by the contents directory acquirer/displayer 220. At this time, "2" is inputted as an inputted ID 1110 in the contents directory creator 610 of the dynamic image site A bundle 331. In reply, the content directory creator 610 of the dynamic image site A bundle 331 sends back the lines 1165 and 1166 to the player 111. As indicated in Fig.15 (D), the names 1140 of the lines 1165 and 1166 are displayed on <Screen Image 1540>, and "Disappointed Cat" 1544 and "Dog and Nininbaori" 1545 are made selectable by the remote control, by the contents directory acquirer/displayer 220. Here, the type 1130 of the lines 1165 and 1166 is an "MPEG-2 dynamic image" and thereby it is indicated that the contents correspond to "Disappointed Cat" 1544 and "Dog and Nininbaori" 1545 are dynamic images. In such case, that an element regarded as regenerable contents not the directory are selected, the contents regenerator 240 is launched by the contents directory acquirer/displayer 220.

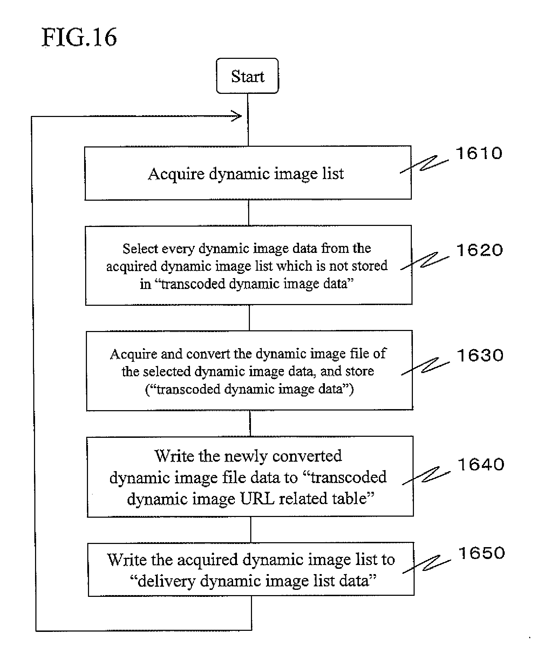

Fig.16 is a flow chart showing a processing of the delivery data creator 410 of the transcoding server 131.
The processing is executed when the transcoding server 131 is activated. After going through the processing and created a delivery data, the processing is executed repeatedly from the first step.

The delivery data creator 410 holds a data of what kind of dynamic image site bundle does the gateway apparatus 120 have, and a data of which each of the dynamic image site bundle holds, such as directory which holds a dynamic image as a child element (contents directory structure 611). Thus, the delivery data creator 410 knows the data of the directory which has the possibility of being requested. Therefore, all of the dynamic images which have the possibility of being requested can be converted previously by the delivery data creator 410.
For example, in this embodiment, the delivery data creator 410 holds the data of which that the gateway apparatus 120 holds the dynamic image site A bundle 331, and the contents directory creator 610 of the dynamic image site A bundle 331 holds the "most viewed dynamic image" of the line 1162, the "top-rated dynamic image" of the line 1163 and the directories of the lines 1167-1169, in Fig.11.
The delivery data creator 410 acquires a dynamic image list and a dynamic image file corresponding to those directories from a dynamic image site, and converts the acquired dynamic image file to an MPEG-2 dynamic image by using the transcoder 411. The processing of the delivery data creator 410 is described below.

### <Step 1610>

In Step 1610, the delivery data creator 410 acquires a dynamic image list which corresponds to the directory of the gateway apparatus 120, from the dynamic image site A. For example, in which case where acquiring a dynamic image list corresponds to the "most viewed dynamic image" directory of the line 1162 in Fig.11, the delivery data creator 410 refers to the API conversion table 431 (refer to Fig.13 (A)) and transmits the following request to the dynamic image delivering server A 132.
http://videosite-a.com/api.cgi?request=mostviewed
The dynamic image delivering server A 132 sends back the dynamic image list data as shown in Fig.8 to the transcoding server 131. The API conversion table 431 is stored in the auxiliary storage device of the transcoding server 131, previously.

### <Step 1620>

The delivery data creator 410 makes a comparison between the dynamic image URL 810 in the dynamic image list data acquired in Step 1610 and the URL 910 in the transcoded dynamic image data URL related table 440 (refer to Fig.9), and selects every dynamic image URL which are included in the URL 810 but not included in the URL 910.

### <Step 1630>

The delivery data creator 410 accesses to the dynamic image URL selected in Step 1620 and acquires a dynamic image file from the dynamic image delivering server A 132. Next, the delivery data creator 410 converts a format of the dynamic image file which was acquired using the transcoder 411, to an MPEG-2, and adds and stores it in the transcoded dynamic image data 450.

### <Step 1640>

With respect to the dynamic image acquired, converted and stored in Step 1630, the delivery data creator 410 adds the dynamic image URL and the location where the converted dynamic image is stored, to the transcoded dynamic image data URL related table 440 (refer to Fig.9).

### <Step 1650>

The delivery data creator 410 stores the dynamic image list acquired in Step 1610 as delivery dynamic image list data 430, in a form shown in Fig. 10, in the auxiliary storage device. If any of the dynamic image which has the category ID identical to the category ID of the dynamic image list which will be newly stored, exists in the already stored delivery dynamic image list data 430 (i.e., in this example, the dynamic image list of "most viewed dynamic image" is not acquired for the first time, but already stored), the delivery data creator 410 deletes all of the lines of the dynamic images which hold the identical category ID and then stores the new dynamic image list.

The delivery data creator 410 executes the processing of the above Step 1610 to Step 1650 to every directories which have the possibility of being requested by each gateway apparatus 120. By executing the processing, there will be already MPEG-2 converted dynamic image files for every dynamic images designated by the dynamic image list acquired from the delivery dynamic image list data 430. (That is because the dynamic image list is added to the delivery dynamic image list data 430 after converting every dynamic images in the dynamic image list acquired from the dynamic image site.)

After executing the processing of Step 1610 to Step 1650 to every directories, the delivery data creator 410 repeats the processing from the beginning, again. In this method, at the time of the repetition of the processing, if the dynamic image list differs vastly from that of previous processing, the number of the dynamic images that need to be converted will increase, and hence it takes relatively long time for executing the series of the processing (i.e., the updating of the dynamic image list which will be transmitted to the gateway apparatus120). By contraries, if the difference of the dynamic image list is little, it takes a short time. In the same way, if the quantity of processing capacity of the transcoding server 131 is large, it takes a short interval to update the dynamic image list with latest data, but if the quantity of processing capacity is small, the update interval will be long. The update interval will be irregular, but the conversion processing capacity of the transcoding server 131 is not left idle but fully utilized, and the whole contents delivery system can be operated regardless of the conversion processing capacity of the transcoding server 131 which is large or small.

Fig. 17 is a flow chart showing the processing of the dynamic image list/dynamic image deliverer 420 of the transcoding server 131.
This processing will be executable after a series of the processing of the delivery data creator 410 in Fig.16 is completed for every dynamic image lists which have the possibility of being requested by the gateway apparatus 120. That is because if a series of the processing in Fig.16 is not completed, for example, a dynamic image list and a converted dynamic image file corresponding to the "news" directory held by the dynamic image site A bundle 331 is not yet prepared in the transcoding server 131.

After the first round of the series of the processing of the delivery data creator 410 is completed and the second round of the series is started, the processing of the delivery data creator 410, and the processing 1710 and the processing 1720 of the dynamic image list/dynamic image deliverer 420 are parallelizable, respectively. That is because the processing of the delivery data creator 410 in Fig.16 stores a dynamic image list as a delivery dynamic image list data 430 after converting and storing every dynamic images in the dynamic image list acquired from the dynamic image site. So the dynamic image list data in the delivery dynamic image list data 430 (refer to Fig.10) and the dynamic image in the transcoded dynamic image data 450 are in the state of always ready to retrieved.

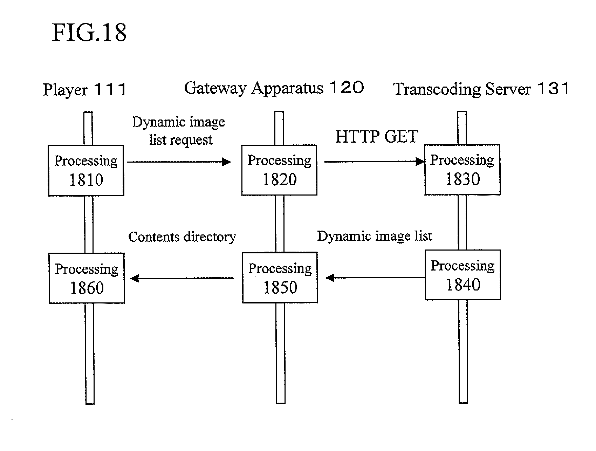

Fig.17 describes the processing of the dynamic image list/dynamic image delivering from the standpoint of the transcoding server 131. On the other hand, Fig.18 and
Fig.19 describe the processing of the dynamic image list/dynamic image delivering from the standpoint of the player 111 and the gateway apparatus 120.

### <Processing 1710>

Fig.17 (A) is a flow chart showing a delivery processing of a dynamic image list.

### <Step 1711>

The dynamic image list/dynamic image deliverer 420 receives a request of a dynamic image list from the gateway apparatus 120. For instance, if the request is for the dynamic image list corresponding to the "most viewed dynamic image" of the line 1162 in Fig.11, the gateway apparatus 120 transmits the following request to the transcoding server 131.
http://transcodeserver/contentslist.cgi?request=a_mostviewed

### <Step 1712>

The dynamic image list/dynamic image deliverer 420 refers to the category ID 1010 and extracts every lines (in the example of Step 1711, the line with the category ID 1010 a_mostviewed) with the category ID 1010 which correspond to the request, from the delivery dynamic image list data 430 (refer to Fig.10). Then the dynamic image list/dynamic image deliverer 420 factors out the row of the category ID 1010 to form a configuration of the dynamic image list data as shown in Fig. 8 and delivers it to the gateway apparatus 120.

### <Processing 1720>

Fig.17 (B) is a flow chart showing a delivery processing of a dynamic image.

### <Step 1721>

The dynamic image list/dynamic image deliverer 420 receives a request for delivering a dynamic image from the gateway apparatus 120. For instance, if the request is for a dynamic image of the line 1165 in Fig.11, the gateway apparatus 120 transmits the following request to the transcoding server 131.
http://transcodeserver/content.cgi?url=http://videosite-a.com/12345.flv
However in practice, the portion of URL indicated by url= is URL encoded.

### <Step 1722>

The dynamic image list/dynamic image deliverer 420 acquires the location where the dynamic image file is stored, from the transcoded dynamic image data URL related table 440 (refer to Fig.9) by using "http://videosite-a.com/12345.flv" which is included in the request received in Step1721. Then the dynamic image list/dynamic image deliverer 420 retrieves the dynamic image file from the transcoded dynamic image data 450 and transmits the dynamic image file to the gateway apparatus 120.

Fig.18 is showing a series of the flow of which the player 111 transmits a request of a dynamic image list and acquires the contents directory.

### <Processing 1810>

If the user selects the "most viewed dynamic image" 1533 (refer to Fig.15 (C)), the player 111 (by using such as a DLNA based SOAP message) requests the dynamic image list which corresponds to the "most viewed dynamic image" directory to the gateway apparatus 120.

### <Processing 1820>

Assuming that the contents directory 340 held by the gateway apparatus 120 is in the state of holding the data of the lines 1161-1164. This time, the gateway apparatus 120 requested by the player 111 of a dynamic image list corresponding to the "most viewed dynamic image" directory, uses the contents directory creator 610 of the dynamic image site A bundle 331 and transmits the following request to the transcoding server 131.
http://transcodeserver/contentslist.cgi?request=a_mostviewed

### <Processing 1830>

The transcoding server 131 which received the request, selects every lines of which the category ID 1010 is a_mostviewed from the delivery dynamic image list data 430 (refer to Fig.10).

### <Processing 1840>

The transcoding server 131 forms the lines selected in Processing 1830 to a configuration of a dynamic image list data as shown in Fig.8 and delivers it using the dynamic image list/dynamic image deliverer 420.

### <Processing 1850>

The gateway apparatus 120 which received the dynamic image list data, adds (lines 1165 and 1166 in Fig.11) the dynamic image list data to the contents directory 340. It is known that the content is an MPEG-2, since it was acquired using the dynamic image site A bundle, so the gateway apparatus 120 sets the type 1130 to MPEG-2 dynamic image. The gateway apparatus 120 uses the ID 1110 to generate the URL 1150. The gateway apparatus 120 delivers the data of the added lines 1165 and 1166 to the player 111.

### <Processing 1860>

The player 111 uses the received dynamic image list data to display such as "Disappointed Cat" 1544 and "Dog and Nininbaori" 1545 (refer to Fig.15(D)) on the display.

Fig.19 is showing a flow of the series of the processing to the point of regenerating the contents using the contents regenerator 240 and above function. Assuming that the player 111, the gateway apparatus 120 and the transcoding server 131 are in the state where the acquiring processing of the contents directory (the processing described with reference to Fig.18) has just completed.

### <Processing 1910>

If a content regenerable on the player 111 is selected during the processing of the contents directory acquirer/displayer 220, the player 111 shifts the processing to the contents regenerator 240. For example, "Disappointed Cat" 1544 (refer to Fig. 15 (D)) of <Screen Image 1540> is selected, the following URL which is set to the URL 1150 of the line 1165 is given to the contents regenerator 240.
http://133.108.2.1/content.cgi?id=5
In response to this URL, the contents regenerator 240 transmits an HTTP request. This time, the URL address "133.108.2.1" is the one of the gateway apparatus 120 (refer to the description of <Step 1420> (5) in Fig.14), and hence, the request is transmitted to the gateway apparatus 120.

### <Processing 1920>

The gateway apparatus 120 calls the dynamic image acquirer/relayer 620 of the dynamic image site A bundle 331. The dynamic image acquirer/relayer 620 extracts <numeral> from id=<numeral> of the URL under request. Then the dynamic image acquirer/relayer 620 extracts the URL 1220 matching with the ID 1210 and <numeral> from the ID dynamic image related table 630 (refer to Fig.12). This time, <numeral> is "5", and hence, the following URL of the line 1231 is extracted.
http://videosite-a.com/12345.flv
   The dynamic image acquirer/relayer 620 uses this URL as a key and transmits the following HTTP request to the transcoding server 131. http://transcodeserver/content.cgi?url=http://videosite-a.com/12345.flv

### <Processing 1930> <Processing 1940>

The transcoding server 131 extracts MPEG-2 dynamic images which correspond to the request, from the transcoded dynamic image data URL related table 440 (refer to Fig.9) and the transcoded dynamic image data 450, and transmits them to the gateway apparatus 120.

### <Processing 1950>

The gateway apparatus 120 transmits the transmitted MPEG-2 dynamic image as it is, to the player 111.

### <Processing 1960>

The MPEG-2 dynamic image is transmitted to the player 111 and is regenerated on the display thereof.

The above embodiment has illustrated an example of the contents delivery system with one gateway apparatus, one transcoding server and two dynamic image delivering servers, but the contents delivery system of the present invention may include two or more gateway apparatuses and transcoding servers, and three or more dynamic image delivering servers.
In addition, the above embodiment has illustrated an example of one dynamic image delivering server holds one dynamic image delivering site, but one dynamic image delivering server may hold a plurality of dynamic image delivering sites.
In addition, the above embodiment has illustrated a processing of the dynamic image site A bundle 331, but the dynamic image site B bundle which mediates between the dynamic image site B and the player 111, executes the same processing as that of the dynamic image site A bundle 331. Furthermore, a gateway apparatus of the present invention may include three or more dynamic image site bundles which execute the same processing as that of the dynamic image site A bundle 331.

In addition, in the above embodiment, the player 111 and the gateway apparatus 120 are connected to an in-house network 110, and the gateway apparatus 120, the transcoding server 131, the dynamic image delivering server A 132 and the dynamic image delivering server B 133 are connected to the Internet 130, but it is not limited to the in-house network 110 or the Internet 130, thus it is fine if a first network connected to the player 111 and the gateway apparatus 120, and a second network connected to the gateway apparatus 120, the transcoding server 131, the dynamic image delivering server A 132 and the dynamic image delivering server B 133 are separate network.

In addition, the above embodiment has illustrated an example where the contents are dynamic images, but the present invention is applicable to music, photographs, documents and other contents.
In addition, the above embodiment has illustrated an example where the transcoding server 131 converts a dynamic image with a different format (such as H.261) to an MPEG-2 dynamic image, but the transcoding server 131 may execute progressive/interlace conversion. Also, the transcoding server 131 may convert the image size like the conversion of HDTV image/SDTV image. Also, the transcoding server 131 may convert the number of screen images regenerated per second.

According to the present invention, a contents conversion apparatus can convert the format of the contents with a constant quantity of processing capacity, despite the number of players regenerating the same contents.
That is to say, according to the present invention, a transcoding server acquires a contents list from a contents delivering site at first. Then, the transcoding server transmits the contents list to a player after acquiring the contents corresponding to the contents list from a contents delivering site and converting. Therefore, the method of the present invention is differ from a method which needs conversion processing for each request from a player, and it needs just one conversion processing for one content, and hence, a calculation for the conversion processing will be constant quantity.

In addition, in the present invention, a transcoding server monitors iteratively the update of a contents list of a contents delivering site, and updates the contents list and converted contents. Therefore, in case where a contents list of a contents delivering site has changed, the changed contents list can be delivered to a player with a short time lag from the change of the contents delivering site.

In addition, the method which needs to convert for each contents request from a player, a transcoding server acquires a content from a contents delivering site and transmits the content to the player in the course of converting a format of the content. Therefore, there is a time lag between a transmission of the request by the player and the beginning of contents delivery. On the other hand, in a contents delivery system of the present invention, a content is already converted, so a transcoding server can deliver it to a player without time lag.

In addition, if a contents delivering server connected to the Internet does not hold a contents directory, a DLNA based player can not display a contents directory on the display. Therefore, an user can not select the contents. As a result, the user can not view or listen any contents.
According to the present invention, in case where a contents delivering server connected to the Internet does not hold a contents directory, a gateway apparatus creates a contents directory, so a DLNA based player can display the contents directory on the display, and an user can select the contents.

The embodiment of the present invention is described above, but varieties of changes or combinations caused by design matters or other factors are in the scope of the claimed invention or the invention corresponds to the specific example described in the embodiment of the invention.

### Explanation of References

110... in-house network, 111... player, 120... gateway apparatus, 180... the Internet, 181...transcoding server, 182...dynamic image delivering server A, 133... dynamic image delivering server B, 210... server finder, 220...contents directory acquirer/displayer, 240... contents regenerator, 310...device publicizer, 320... software management framework, 330...bundle group, 331...dynamic image site A bundle, 340...contents directory, 410...delivery data creator, 411...transcoder, 420...dynamic image list/dynamic image deliverer, 430...delivery dynamic image list data, 431... API conversion table, 440...transcoded dynamic image data URL related table, 450... transcoded dynamic image data, 510... dynamic image list provider, 520... dynamic image deliverer, 530... dynamic image data, 610... contents directory creator, 611... contents directory structure, 612... directory/API related table, 620...dynamic image acquirer/relayer, 630...ID dynamic image related table

## Claims

1. A contents conversion apparatus comprising:
a delivery data creator which acquires a prescribed contents list data from a contents delivering apparatus for delivering a plurality of contents list data and contents designated by each of the contents list data, stores it in a storage device, acquires a content designated by the acquired contents list data from the contents delivering apparatus, converts the acquired content to a content with a format regenerable on a player, and stores the converted content in the storage device; and
a contents list/contents deliverer which retrieves the contents list data and/or the contents from the storage device, upon request from the player, and
transmits them to the player.

2. The contents conversion apparatus according to claim 1, wherein the delivery data creator which after storing the prescribed contents list data and the converted contents in the storage device, acquires the prescribed contents list data from the contents delivering apparatus again, discerns whether a new content designated by the prescribed contents list data which was acquired again, but not designated by the prescribed contents list data stored in the storage device, exists or not, in which case, where it was discerned that there is a new content, overwrites the prescribed contents list data stored in the storage device with the prescribed contents list data which was acquired again, converts the new content to a content with a format regenerable on the player, stores the converted content in the storage device, and repeats the reacquisition of the contents list data, the discernment, the overwriting of the contents list data and the storage of the converted contents.

3. A contents conversion method comprising:
a step of creating delivery data, that is acquiring a prescribed contents list data from a contents delivering apparatus for delivering a plurality of contents list data and contents designated by each of the contents list data, storing it in a storage device, acquiring a content designated by the acquired contents list data from the contents delivering apparatus, converting the acquired content to a content with a format regenerable on a player, and storing the converted content in the storage device; and
a step of delivering contents list/contents, that is retrieving the contents list data and/or the contents from the storage device, upon request from the player, and transmitting them to the player.

4. A contents conversion program that causes a computer to execute:
a step of creating delivery data, that is acquiring a prescribed contents list data from a contents delivering apparatus for delivering a plurality of contents list data and contents designated by each of the contents list data, storing it in a storage device, acquiring a content designated by the acquired contents list data from the contents delivering apparatus, converting the acquired content to a content with a format regenerable on a player, and storing the converted content in the storage device; and
a step of delivering contents list/contents, that is retrieving the contents list data and/or the contents from the storage device, upon request from the player, and transmitting them to the player.

5. A contents delivery system in which a player and a gateway apparatus are connected to a first network, and the gateway apparatus, a contents conversion apparatus and a contents delivering apparatus are connected to a second network, wherein:
the contents delivering apparatus delivers a plurality of contents list data and contents designated by each of the contents list data;
the contents conversion apparatus includes:
a delivery data creator which acquires a prescribed contents list data from the contents delivering apparatus, stores it in a storage device, acquires a content designated by the acquired contents list data, from the contents delivering apparatus, converts the acquired content to a content with a format regenerable on a player, and stores the converted content in the storage device; and
a contents list/contents deliverer which retrieves the contents list data and/or the contents from the storage device, upon request from the gateway apparatus, and transmits them to the player;
the gateway apparatus includes:
a contents directory creator which upon request from the player, requests the contents list data to the contents delivering apparatus, acquires the contents list data from the contents conversion apparatus, converts the acquired contents list data into a contents directory, and transmits the contents directory to the player; and
a contents acquirer/relayer which upon request from the player, requests a content to the contents delivering apparatus, acquires a content from the contents conversion apparatus, and transmits the acquired content to the player; and
the player includes:
a contents directory acquirer/displayer which requests the contents directory to the gateway apparatus, acquires the contents directory from the gateway apparatus, and displays it on a displaying device; and
a contents regenerator which requests a content selected by an user from the contents designated by the contents list data included in the contents directory displayed on the displaying device.
